# EUROPEAN PATENT APPLICATION

(11) **EP 4 542 937 A1**
(43) Date of publication of application: **23.04.2025**
(21) Application number: 23204197.0
(22) Date of filing: 17.10.2023
(51) Int. Cl.: H04L 12/417

(54) **A RECONCILIATION MODULE AND ASSOCIATED METHOD FOR COLLISION AVOIDANCE**

(71) Applicant: NXP B.V., 5656 AG Eindhoven (NL)
(72) Inventor: den Besten,, Gerrit Willem, 5656 AG Eindhoven (NL); Axer,, Philip, 5656 AG Eindhoven (NL)
(74) Representative: Schmütz, Christian Klaus Johannes

(57) **Abstract**

A reconciliation module for a node of a multidrop bus network, the reconciliation module comprising circuitry configured to:
receive data sent from a MAC module of the node as part of a first attempt by the MAC module to transmit the data;
assert a collision signal by default on receipt of the data from the MAC module to stop the MAC module from continuing to send the data; and
control a sense signal to cause the MAC module to resend the data as part of a second transmission attempt such that the data may be transmitted on the multidrop bus network via a PHY module of the node at an upcoming transmit opportunity.

## Description

### Field

The present disclosure relates to multidrop bus networks, and in particular concerns an apparatus and associated method of collision avoidance for a node of a multidrop bus network.

### Backaround

Collisions on the bus of a multidrop bus network can cause a decrease in bus efficiency and throughput. The apparatus and associated method described herein may address this issue.

### Summary

According to a first aspect of the present disclosure, there is provided a reconciliation module for a node of a multidrop bus network, the reconciliation module comprising circuitry configured to:
receive data sent from a MAC module of the node as part of a first attempt by the MAC module to transmit the data;
assert a collision signal by default on receipt of the data from the MAC module to stop the MAC module from continuing to send the data; and
control a sense signal to cause the MAC module to resend the data as part of a second transmission attempt such that the data may be transmitted on the multidrop bus network via a PHY module of the node at an upcoming transmit opportunity.

In one or more embodiments, the reconciliation module may be configured to control the sense signal such that the second transmission attempt is synchronised with the upcoming transmit opportunity of the node.

In one or more embodiments, the reconciliation module may be configured to assert the sense signal on receipt of the data from the MAC module as part of the first transmission attempt and keep the sense signal asserted until the data can be transmitted as part of the second transmission attempt at the upcoming transmit opportunity, at which point the sense signal may be de-asserted by the reconciliation module.

In one or more embodiments, the MAC module may be configured to delay resending of the data by a wait time after de-assertion of the sense signal, and the reconciliation module may be configured to transmit a filler sequence during the wait time of the MAC module to prevent the upcoming transmit opportunity of the node from timing out.

In one or more embodiments, the wait time may be equal to an inter-packet-gap length.

In one or more embodiments, the upcoming transmit opportunity may have a duration of less than one inter-packet gap length.

In one or more embodiments, the MAC module may require a recovery time following assertion of the collision signal before it can resend the data as part of the second transmission attempt, and the reconciliation module may be configured to wait at least the recovery time before de-asserting the sense signal.

In one or more embodiments, the reconciliation module may be configured to determine the recovery time of the MAC module.

In one or more embodiments, the reconciliation module may be configured to determine the recovery time of the MAC module by monitoring timing properties of the MAC module or by obtaining them from a register.

In one or more embodiments, the reconciliation module may be configured to receive a detection signal from the PHY module indicative of activity from other nodes on the multidrop bus network, and de-assert the sense signal when the detection signal indicates that an immediately preceding node in a bus schedule of the multidrop bus network is no longer active or has timed out.

In one or more embodiments, the reconciliation module may be configured to:
re-assert the sense signal during the second transmission attempt by the MAC module;
de-assert the sense signal again once the data has been transmitted on the multidrop bus network; and
keep the sense signal de-asserted until receipt of further data from the MAC module.

In one or more embodiments, the resent data may comprise a first data frame and the MAC module may attempt to send a second data frame for the first time together with the first data frame. If the node is only allowed to transmit one frame per transmit opportunity, the reconciliation module may be configured to:
pass the first data frame to the PHY module for transmission on the multidrop bus network;
assert a collision signal in respect of the second data frame by default when transmission of the first data frame has been completed; and
de-assert the sense signal when a subsequent transmit opportunity arrives to enable transmission of the second data frame.

In one or more embodiments, the data received from the MAC module may comprise a plurality of data frames within the same sequence for transmission at the upcoming transmit opportunity, and the reconciliation module may be configured to insert an active-idle sequence between adjacent data frames to prevent the multidrop bus network from becoming idle before the plurality of data frames have been transmitted.

In one or more embodiments, the reconciliation module may be bufferless.

In one or more embodiments, the reconciliation module may be configured to inspect the data, and take any necessary action, after the collision signal has been asserted and before the data has been transmitted.

According to a second aspect of the present disclosure, there is provided a node of a multidrop bus network, the node comprising the reconciliation module of the first aspect, the MAC module and the PHY module.

In one or more embodiments, the multidrop bus network may be an Ethernet network, the MAC module may be an Ethernet CSMA/CD MAC layer and the PHY module may be a 10BASE-T1S PHY layer.

According to a third aspect of the present disclosure, there is provided a multidrop bus network comprising a plurality of the nodes of the second aspect.

According to a fourth aspect of the present disclosure, there is provided a method of collision avoidance for a node of a multidrop bus network, the method comprising:
receiving data sent from a MAC module of the node as part of a first attempt by the MAC module to transmit the data;
asserting a collision signal by default on receipt of the data from the MAC module to stop the MAC module from continuing to send the data; and
controlling a sense signal to cause the MAC module to resend the data as part of a second transmission attempt such that the data may be transmitted on the multidrop bus network via a PHY module of the node at an upcoming transmit opportunity.

According to a fifth aspect of the present disclosure, there is provided a computer program comprising computer code configured to control the reconciliation module of the first aspect, control the node of the second aspect, control the multidrop bus network of the third aspect, or perform the method of the fourth aspect.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows the IEEE-standard media-independent interface (MII) between MAC and PHY modules;
Figure 2 shows a reconciliation module between the MAC and PHY modules to avoid bus collisions, wherein both the MAC and PHY modules communicate with the reconciliation module using a MII;
Figure 3 shows a reconciliation module with data buffer between the MAC and PHY modules;
Figure 4 shows transmission attempts by the MAC module of the node of Figure 3 on a fully-loaded bus, wherein every first transmission attempt of the MAC module occurs well in advance of the transmit opportunity of this node;
Figure 5 shows transmission attempts by the MAC module of the node of Figure 3 in which a transmit opportunity has timed out;
Figure 6 shows transmission attempts by the MAC module of the node of Figure 3 in which consecutive transmit opportunities have timed out;
Figure 7 shows a reconciliation module without data buffer between the MAC and PHY modules;
Figure 8 shows transmission attempts by the MAC module of the node of Figure 7 on a fully-loaded bus;
Figure 9 shows transmission attempts by the MAC module of the node of Figure 7 in which a transmit opportunity has timed out;
Figure 10 shows transmission attempts by the MAC module of the node of Figure 7 in which consecutive transmit opportunities have timed out;
Figure 11 shows the transmission attempts of Figure 8 in which the sense signal to the MAC module stays de-asserted during transmissions of other nodes if there is no frame pending for re-transmission;
Figure 12 shows the transmission attempts of Figure 9 in which the sense signal to the MAC module stays de-asserted during transmissions of other nodes if there is no frame pending for re-transmission;
Figure 13 shows the transmission attempts of Figure 10 in which the sense signal to the MAC module stays de-asserted during transmissions of other nodes if there is no frame pending for re-transmission;
Figure 14 shows a method of collision avoidance for a node of a multidrop bus network; and
Figure 15 shows a computer-readable medium comprising a computer program configured to control, perform or enable the method of Figure 14.

### Detailed Description

### Ethernet standards

While much of the focus in recent Ethernet development has centred on high data rates, not every application requires speeds of up to 400 Gbps. For some applications, including Internet of Things (IoT), industrial and automotive, 10 Mbps is sufficient for certain functions. Factors like cost, weight, distance and the space required for cables are more important for these use cases.

Recognizing these evolving requirements, IEEE began work in early 2017 to define IEEE 802.3cg, a standard for single-pair Ethernet that supports 10 Mbps. The goals of IEEE 802.3cg were to define a point-to-point and a multidrop short-distance standard with a maximum length of 25 meters, and a long-distance point-to-point standard that supports distances up to 1,000 meters. The resulting IEEE 802.3cg specification includes two link-layer standards: 10BASE-T1S and 10BASE-T1L.

The 10BASE-T1S short-range standard is primarily targeted at automotive and industrial applications. Multiple nodes on the network can share a cable in half-duplex shared-medium mode (multidrop mode) using the standard Ethernet Carrier-Sense Multiple Access with Collision Detection (CSMA/CD) access method or operate using PHY-Level Collision Avoidance (PLCA). The cable might be an unshielded twisted pair (UTP) that may have multiple nodes with their medium dependent interfaces (MDIs) attached thereto. As such, 10BASE-T1S may also be referred to as Multidrop Single Pair Ethernet.

The 10BASE-T1L long-range option is designed for IoT and industrial control applications. The 1,000-meter range is sufficient for use in large factories or warehouses, and 10 Mbps is sufficient for gathering data from sensors and to monitor and control many types of industrial machinery. It shares the advantages of the short network variant: MAC-level compatibility with multipair Ethernet and lower cost, weight and required space.

The following description relates to the 10BASE-T1S standard but may be also applicable to other (including future) networking standards and is therefore not necessarily limited to Ethernet or 10BASE-T1S.

### Technical problem

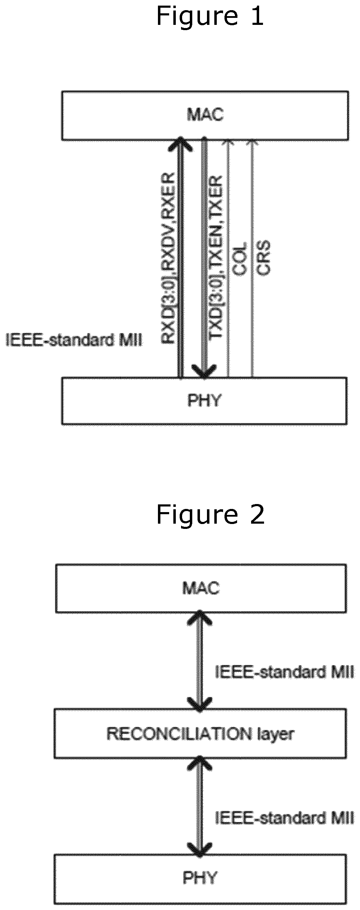

Figure 1 illustrates the carrier-sense multiple access with collision detection (CSMA/CD) media access control (MAC) protocol. CSMA/CD uses carrier-sensing (CRS) to defer transmissions until no other nodes on the network are transmitting. When a collision is detected by the PHY module/layer of a node (CRS=1), it stops transmitting that frame, asserts a collision signal (COL=1) to the MAC module/layer of the node, and waits until the bus is silent before de-asserting the sense signal (CRS=0). The MAC module keeps transmitting for a predefined (jam) time to ensure that all nodes on the bus will observe the collision and then stops transmitting and waits until the sense signal (CRS-M) is de-asserted before trying to resend the frame to the PHY module for re-transmission on the bus. The first re-transmission attempt occurs one IPG time after the sense signal (CRS) is de-asserted again. If that would result in another collision, however, then the MAC module introduces a random variable back-off time from the second re-transmission attempt onwards to avoid indefinitely repeated collisions.

A problem with CSMA/CD is that multiple nodes may attempt to transmit data on the bus simultaneously when the bus is silent. This leads to collisions, corrupted data, time-outs and loss of bus capacity, which in turn can result in severe degradation of effective bus throughput or even a complete collapse as the total bus load gets closer to (e.g. around 70% of) the maximum bus capacity.

Figure 2 shows an example of a collision avoidance mechanism developed to improve bus capacity. This mechanism is known as physical layer collision avoidance (PLCA) and uses a reconciliation module/layer connected between the MAC and PHY modules with respective IEEE-standard media-independent interfaces (MIIs). Each MII may comprise the same set of pins: transmit data (TXD[3:0]), transmit enable (TXEN), transmit error (TXER), receive data (RXD[3:0]), received data valid (RXDV), receive error (RXER), collision detect (COL) and carrier sense (CRS), and furthermore two clock signals (TXCLK and RXCLK, not shown) as defined in IEEE 802.3 Clause 22.

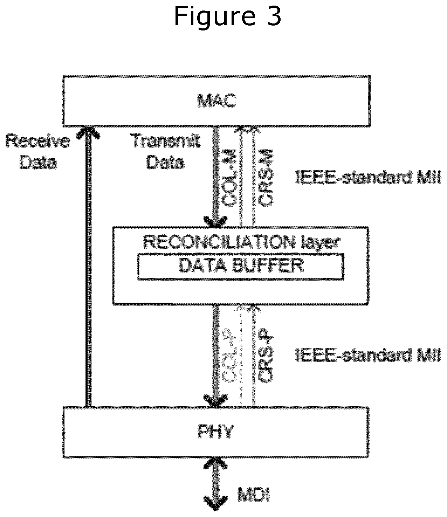

PLCA uses a round-robin scheme in which the nodes are numbered and given the opportunity to transmit one at a time starting at a dedicated time slot (or transmit opportunity TO) in a cyclic manner based on their numbering. One node is assigned as the head node (or PLCA coordinator) and starts each cycle with a beacon. If no data is transmitted by a node at its transmit opportunity, the transmit opportunity is passed to the next node. The reconciliation module knows when the transmit opportunity of its node occurs based on the node number and manages the MAC module using collision (COL-M) and sense (CRS-M) signal manipulations to prevent the MAC module from sending data that cannot be transmitted by the PHY module. In this way, the reconciliation module only passes data to the PHY module when there is a transmit opportunity. The combination of the round-robin scheme with the reconciliation module therefore avoids collisions on the bus. Since there should be no collision events for the PHY module to report, the COL-P pin becomes functionally redundant (and is hence greyed out in Figure 3) but may still be useful for detecting true bus problems.

Figure 3 shows an example of a PLCA mechanism involving a reconciliation module with data buffer (e.g. a first in first out buffer). The data buffer addresses a scenario in which the reconciliation module starts to receive data from the MAC module shortly before a transmit opportunity of the node. In this scenario, the data has been sent from the MAC module too early to be transmitted immediately but too late for the reconciliation module to signal a collision and have the data re-transmitted in time for the upcoming transmit opportunity. The data buffer therefore enables the reconciliation module to temporarily store data sent from the MAC module so that it can be passed to the PHY module for transmission at the upcoming transmit opportunity.

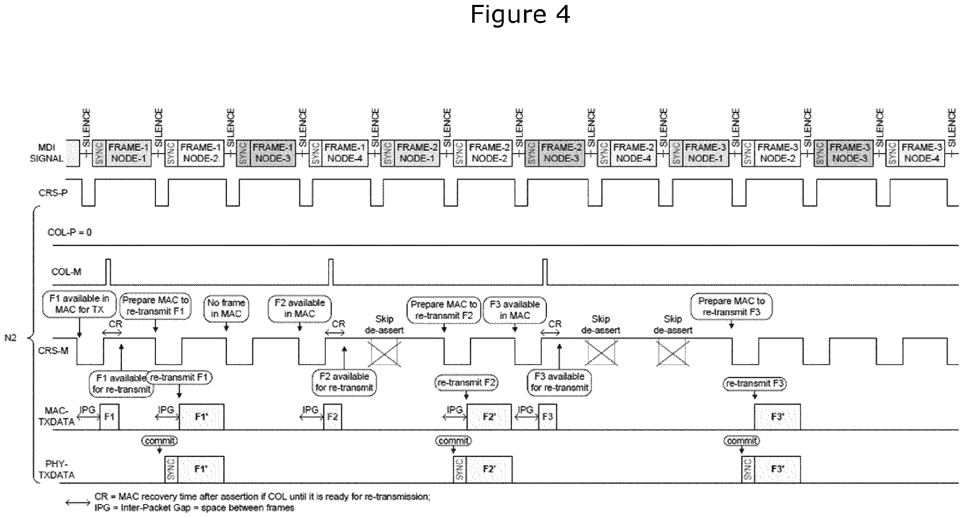

Figure 4 shows transmission attempts (MAC-TXDATA) by the MAC module of a node with the collision avoidance mechanism of Figure 3 on a fully-loaded bus, wherein frames are timely available in the MAC modules of the respective nodes to utilise every transmit opportunity. In this figure, four nodes are transmitting data on the bus with each node transmitting a single data frame at each of its respective transmit opportunities. The numbering of the nodes is provided for illustrative purposes and is non-limiting (e.g. the head node may be numbered "0" in practice). The first transmission attempts of node 2 for data frames 1-3 are respectively denoted F1-F3 and the second (re-transmission attempts are respectively denoted F1'-F3'.

The reconciliation module receives a detect signal (CRS-P) from the PHY module indicative of transmission activity detected on the bus. The detect signal substantially follows the bus schedule with a slight delay depending on the responsiveness of the PHY module to detect and report the bus activity. The reconciliation module is configured to de-assert the sense signal (CRS-M) each time the detect signal (CRS-P) is de-asserted, unless there has been an earlier transmission attempt by the MAC module for the same frame as described below.

The MAC module is configured to send data to the reconciliation module whenever it has a frame pending for transmission and the sense signal (CRS-M) has been de-asserted by the reconciliation module. To ensure a minimum gap between frames for most Ethernet PHY types, however, the MAC module will delay sending the data to the reconciliation module by a wait time after de-assertion of the sense signal (CRS-M). In this example shown, the wait time of the MAC module is equal to an inter-packet-gap (IPG) length (e.g. 12 bytes). The reconciliation module then re-asserts the sense signal (CRS-M) again on receipt of the data from the MAC module or on detecting activity on the bus via the detect signal (CRS-P). In the examples shown herein, de-assertion of the sense signal (CRS-M) is directly correlated with de-assertion of the detect signal (CRS-P), but re-assertion of the sense signal (CRS-M) is slightly delayed relative to re-assertion of the detect signal (CRS-P). This is intended to help ensure that the MAC module sends the pending data after the wait time even if the transmit opportunities are shorter than 1 IPG, but may not be necessary. As such, re-assertion of the sense signal (CRS-M) could also be directly correlated with re-assertion of the detect signal (CRS-P).

While the sense signal (CRS-M) is de-asserted, the data from the MAC module is buffered in the reconciliation module provided the buffer does not overflow. If a transmission attempt by the MAC module cannot be sufficiently aligned with a transmit opportunity for that node using the buffer, the reconciliation module is configured to assert a collision signal (COL-M) to stop the MAC module from continuing to send the data. This happens by default when another node starts transmitting a data frame on the bus and the detect signal (CRS-P) is asserted. The reconciliation module then de-asserts the collision signal (COL-M). The collision signal (COL-M) need only be asserted long enough to be recognised by the MAC module, and should ideally be as short as possible (e.g. one clock cycle) to avoid any loss of time until recovery.

Following assertion of the collision signal (COL-M) by the reconciliation module, the sense signal (CRS-M) is not immediately de-asserted. This is for two reasons. Firstly, the MAC module requires a recovery time (CR) following assertion of the collision signal before it can resend the data as part of the upcoming transmission attempt. Secondly, it is more efficient for the bus to try and ensure that the re-transmission attempt is synchronised with the upcoming transmit opportunity to avoid any further delays in transmitting the data frame. To achieve this, the sense signal (CRS-M) is kept asserted until the data can be directly transmitted without buffering at the upcoming transmit opportunity and then de-asserted to enable said transmission after the recovery time of the MAC module.

The data frame is then passed by the reconciliation module to the PHY module for transmission (PHY-TXDATA) starting at the upcoming transmit opportunity. It should be mentioned that transmit opportunities can be relatively short (e.g. shorter than the IPG length) and typically do not provide enough time for a node to transmit complete frames. Rather, they provide a time slot or window for the node to claim the bus before the opportunity times out and the next node has the opportunity. A node can claim the bus during a transmit opportunity by starting to transmit a data frame or a filler sequence (SYNC symbols). For example, the reconciliation module may be configured to transmit SYNC symbols on the bus via the PHY module during the wait time of the MAC module. Once the bus has been claimed by the node, it can then proceed to transmit any frame size or even multiple data frames if configured to allow this.

In the example of Figure 4, the upcoming transmit opportunity for frame 1 of node 2 is the next transmit opportunity on the bus schedule following the (virtual) collision. For frames 2 and 3 of node 2, on the other hand, there are intervening transmit opportunities for other nodes on the bus schedule. Since the reconciliation module keeps the sense signal (CRS-M) asserted until the frames can be re-transmitted at the respective upcoming transmit opportunities, the de-assertions of the sense signal (CRS-M) which would otherwise follow the detect signal (CRS-P) from the PHY module are skipped.

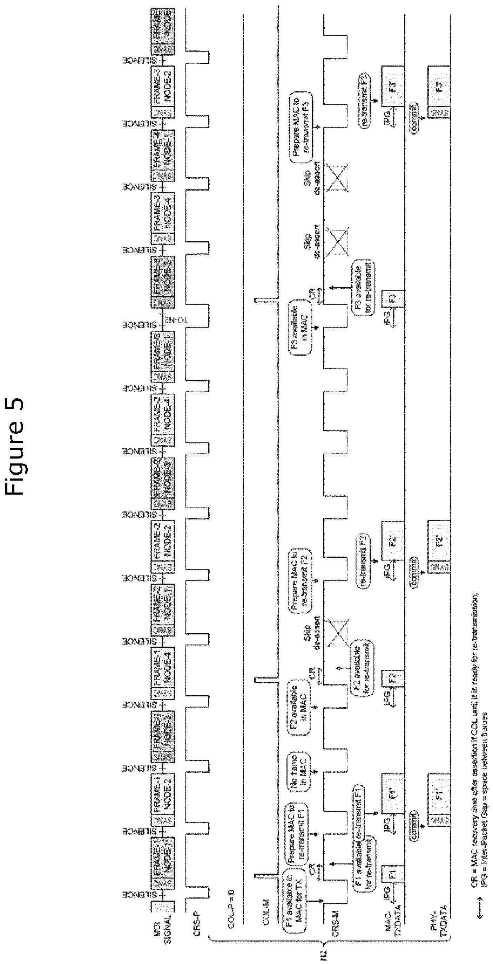

Figure 5 shows further transmission attempts by the MAC module of a node with the collision avoidance mechanism of Figure 3. Unlike the example of Figure 4 in which every transmit opportunity on the bus is used (i.e. a fully-loaded bus), one of the transmit opportunities for node 2 has timed out. This is because frame 3 of node 2 only becomes available in the MAC module sometime during the transmission of frame 3 of node 1. Since the MAC module delays sending data to the reconciliation module by a wait time of one IPG after de-assertion of the sense signal (CRS-M), there is insufficient time to start transmitting frame 3 of node 2 in the upcoming transmit opportunity for that node if the transmit opportunity ends within roughly 1 IPG length after de-assertion of the sense signal (CRS-M). As such, the reconciliation module asserts the collision (COL-M) and sense (CRS-M) signals and keeps the sense signal (CRS-M) asserted until the next transmit opportunity of the node is detected, at which point it is de-asserted to enable transmission of the frame on the bus. It is important to note here that, although the reconciliation module can temporarily store a limited amount of data in the buffer, the buffer is flushed if any other node transmits data between the transmit opportunities of this node (otherwise a large buffer to store complete frames would be required in the reconciliation module). For this reason, frame 3 could not be stored in the buffer in preparation for the next transmit opportunity of node 2 (hence why the collision signal was asserted and the first transmission attempt aborted).

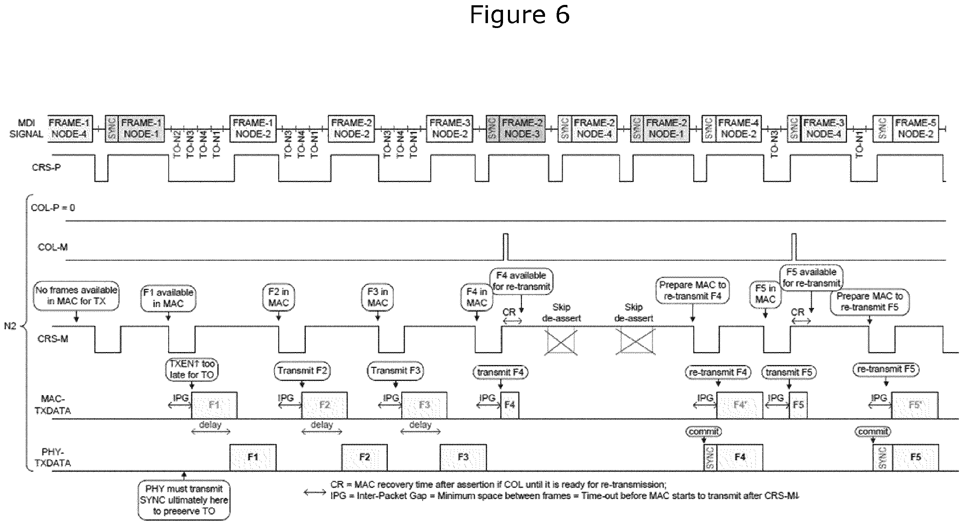

Figure 6 shows further transmission attempts by the MAC module of a node with the collision avoidance mechanism of Figure 3. In this example, consecutive transmit opportunities for nodes 3, 4 and 1 have each timed out such that node 2 is the only node transmitting on the bus for a duration. This is referred to herein as a "boomerang transmit opportunity" for node 2 where the transmit opportunity for this node returns without any intervening transmissions by other nodes.

As shown in the figure, the MAC module of node 2 attempts to transmit frame 1 an IPG length after the sense signal (CRS-M) is de-asserted following transmission of the first frame by node 1. Since this is too late for transmission at the upcoming transmit opportunity of node 2, the reconciliation module temporarily stores frame 1 in the buffer until the next transmit opportunity arrives, at which point it is transmitted on the bus by the PHY module. This is only possible because there are no intervening transmissions by other nodes, otherwise the buffer would have been flushed and a collision signal asserted (as per the example in Figure 5). The result is the transmission of frames 1-3 by node 2 being delayed by the buffer until the respective transmit opportunities of that node without the need for any re-transmission attempts by the MAC module. In contrast, collision signals (COL-M) are asserted for frames 4 and 5 because they are received from the MAC module while there are intervening transmissions by other nodes. These frames are therefore re-transmitted at the next transmit opportunity similar to the previous examples.

Although the PLCA mechanism successfully avoids collisions on the bus by blocking transmission outside of the scheduled transmit opportunities for the node, the use of a data buffer in the reconciliation module complicates the system and loses its benefit when the MAC module tries to send more data - before it can be transmitted on the bus - than the buffer can temporarily store or when any other node transmits a frame. Furthermore, the time-period during which it is too early to transmit the data from the MAC module and yet too late for re-transmission after a virtual collision is relatively short in relation to the total bus cycle time. In view of the above, it can be difficult to justify the additional cost and complexity associated with the data buffer.

### Embodiments of the present disclosure

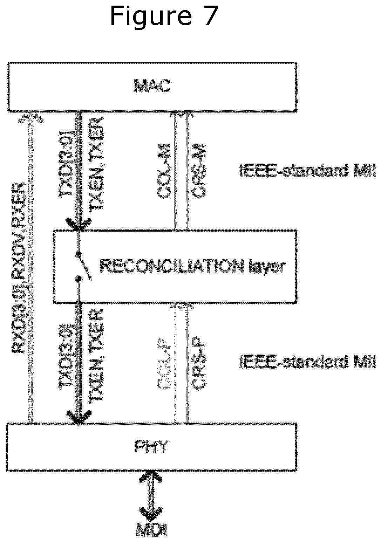

Figure 7 shows an example of a collision avoidance mechanism involving a reconciliation module (or layer) which addresses the above-mentioned problem without requiring a data buffer. In this example, the reconciliation module is configured to assert a collision signal by default when the MAC module (or layer) sends data as part of a first transmission attempt, and control a sense signal to enable re-transmission of the data on a second transmission attempt by the MAC module.

The expression "by default" may be taken to mean that the collision signal is asserted regardless of when the data is received from the MAC module relative to a bus schedule of the multidrop bus network. Furthermore, the reconciliation module is configured to perform the above-mentioned assert and control steps for all data (e.g. data frames or data packets) received from the MAC module.

The upcoming transmit opportunity may be the first or second upcoming transmit opportunity on the bus schedule for that node depending on how much time is left until the start of the first upcoming transmit opportunity. In other words, there is a cut-off point in time (known to the reconciliation module) when the data can no longer be transmitted in the first upcoming transmit opportunity and needs to be deferred until the second upcoming transmit opportunity. It is important to note here that there is no real penalty incurred by postponing transmission of the data by one bus cycle. A cut-off point also exists for a reconciliation module with data buffer, the only difference being that the buffering allows the cut-off point to be closer in time to the start of the first upcoming transmit opportunity as data is available in the buffer for passing to the PHY module (or layer).

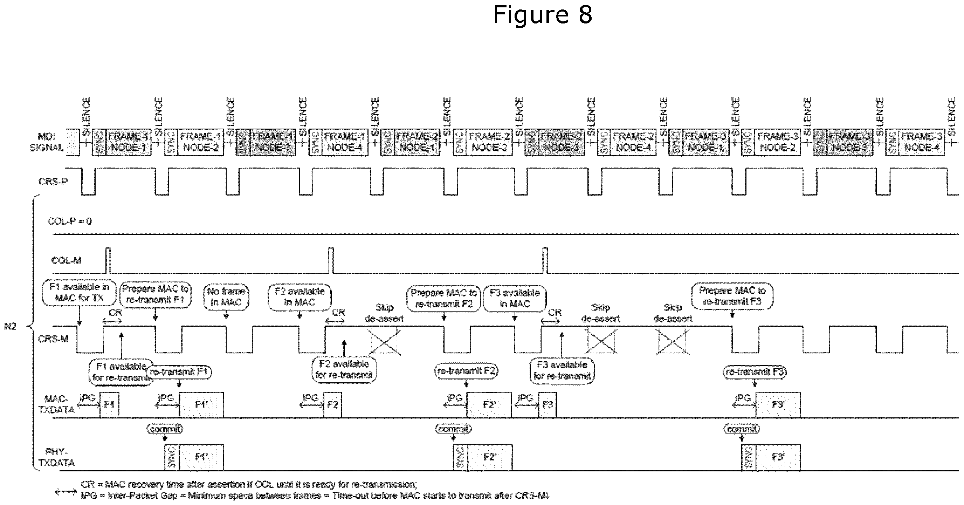

Figure 8 shows transmission attempts (MAC-TXDATA) by the MAC module of a node, and the associated data transmission (PHY-TXDATA) by the PHY module of the node, with the collision avoidance mechanism of Figure 7 on a fully-loaded bus for comparison with Figure 4. Whilst the bus schedule is shown with a fixed bus cycle time and fixed frame lengths for the nodes, this is merely an example and is not necessary. Each attempt of the MAC module to send a frame is initially blocked by asserting the collision signal (COL-M), and a re-transmission of that data frame is initiated by de-assertion of the sense signal (CRS-M) close to a transmit opportunity such that the resent data frame can be directly transmitted on the bus by the PHY module without buffering.

In the example of Figure 8, all collisions occur substantially in advance of the first upcoming transmit opportunity of the node. As such, there is ample time for all data frames to be re-transmitted at the first upcoming transmit opportunity rather than being deferred until the second upcoming transmit opportunity. In other examples, however, the collisions may occur closer to the cut-off point. The cut-off point itself is dependent upon multiple factors and may be determined by the reconciliation module. For example, the reconciliation module may be configured to determine the recovery time (CR) and wait time of its MAC module by monitoring timing properties of the MAC module or by obtaining them from a register. In addition, the response time taken by the PHY module to provide a detection signal (CRS-P) indicative of activity from other nodes on the bus can vary but should be known for a particular PHY module design.

Since the amount of data transmitted by each node is variable, and some transmit opportunities may time out, the node needs to monitor the bus activity to determine when the bus has been released by the immediately preceding node. To achieve this, the reconciliation module may be configured to receive a detection signal (CRS-P) from the PHY module indicative of activity from other nodes on the network, and de-assert the sense signal (CRS-M) as soon as the detection signal indicates that the immediately preceding node is no longer active or has timed out.

When compared to the example of Figure 4 in which the reconciliation module has the data buffer, the transmit attempts by the MAC module (MAX-TXDATA) of node 2 and the resulting transmissions on the bus (PHY-TXDATA) are unchanged. This is because the transmission attempts of each data frame in Figure 4 coincide with the transmission opportunity of other nodes, thereby necessitating the assertion of a virtual collision (COL-M) and subsequent re-transmission of the frame.

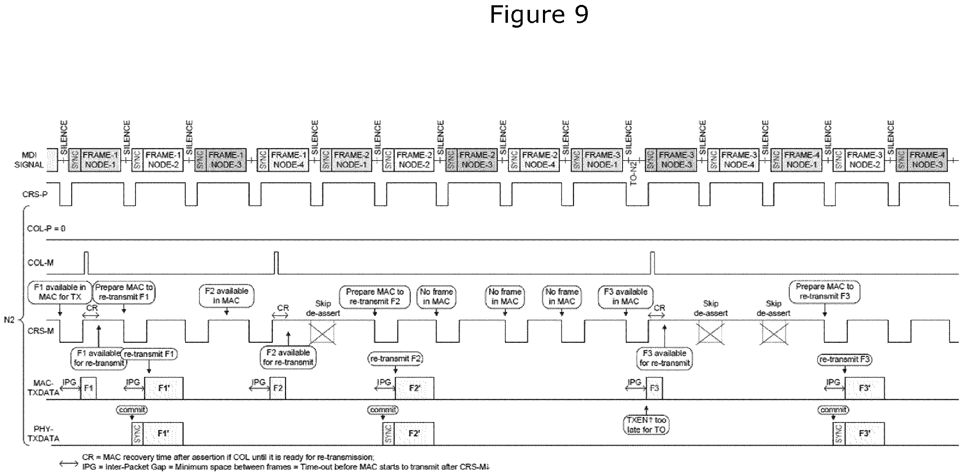

Figure 9 shows transmission attempts by the MAC module of node 2 with the collision avoidance mechanism of Figure 7 for comparison with Figure 5. Like the example of Figure 5, the transmit opportunity for frame 3 of node 2 times out because this frame arrives too late for transmission at the first upcoming transmit opportunity.

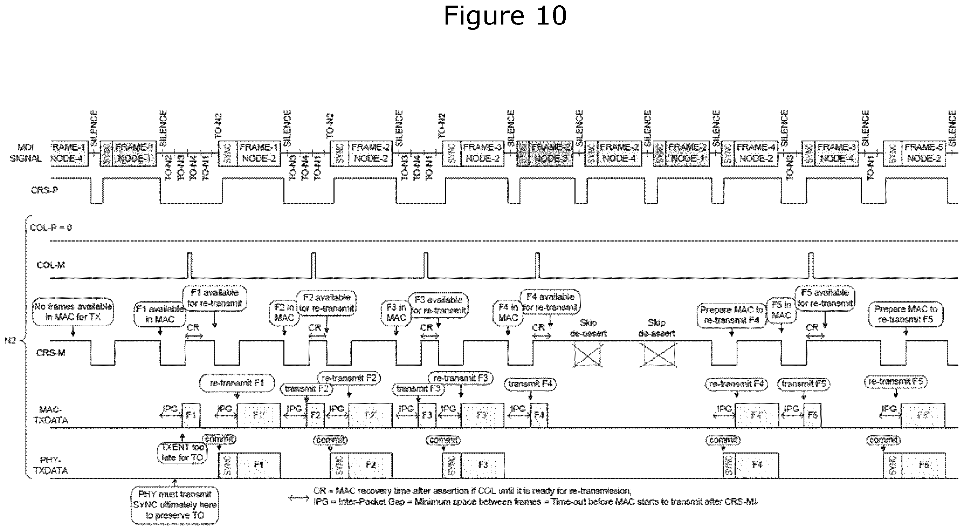

Figure 10 shows further transmission attempts by the MAC module of node 2 with the collision avoidance mechanism of Figure 7 for comparison with Figure 6. As before, consecutive transmit opportunities for nodes 3, 4 and 1 have each timed out such that node 2 is the only node transmitting on the bus for a duration (i.e. boomerang transmit opportunities). This time, however, instead of the reconciliation module buffering parts of frames 1-3 on receipt from the MAC module, it aborts the first transmission attempt by asserting a collision signal (COL-M) and de-asserts the sense signal (CRS-M) at the upcoming transmit opportunity to enable transmission of these frames on the second transmission attempt. The transmission attempts by the MAC module, and the resulting transmissions on the bus, are unchanged for frames 4 and 5 because they are received from the MAC module during the transmissions of other nodes.

The above examples illustrate that the use of a data buffer in the reconciliation module has no impact on the bus efficiency unless the abortion and re-transmission of a data frame cannot fit in the time between boomerang transmit opportunities. This situation is unlikely to occur in most practical situations because the duration of a transmit opportunity (although not absolutely quantified in the standard) can practically not be very short and is therefore likely to be a significant fraction of an IPG. As such, only around 2-3 skipped transmit opportunities would likely be required to fit. Furthermore, even if the abortion and re-transmission would not fit perfectly, the reconciliation module may anyway be configured to claim the bus at the upcoming transmit opportunity and send SYNC symbols until the MAC module is ready to re-transmit. This is possible because the reconciliation module knows that a frame is pending once it has asserted a collision.

An advantage of communicating a collision to the MAC module for every first transmission attempt of a data frame instead of buffering data in the reconciliation module is that it allows the frame to be inspected, and any necessary action to be taken, before the frame is transmitted. For example, it can be checked whether the given destination and/or message type are allowed to be used by this node, and if not, kill the frame by not sending it on the bus at re-transmission.

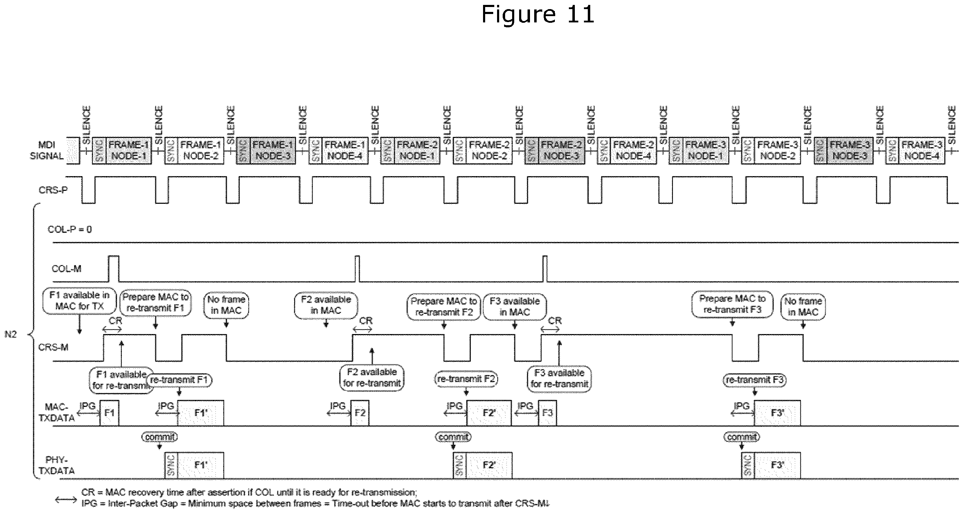

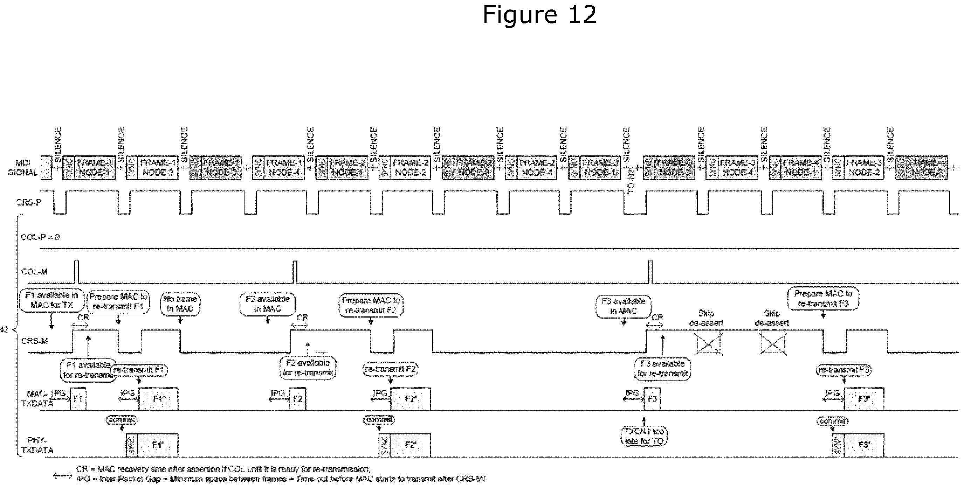

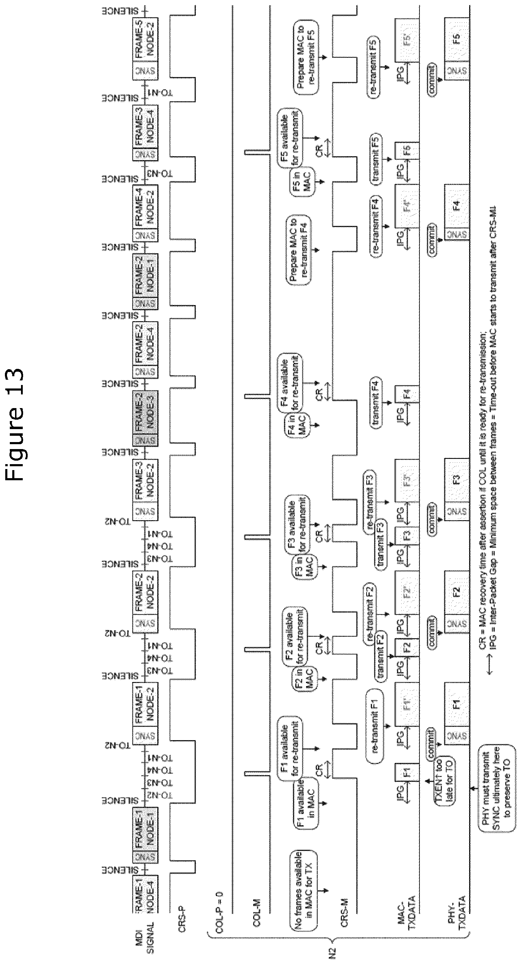

Figure 11-13 show the transmission attempts of Figures 8-10, respectively, in which the sense signal is de-asserted between transmissions of the node. This aspect of the present disclosure recognises that it is neither necessary nor effective for the sense signal (CRS-M) of the reconciliation module to follow the detect signal (CRS-P) of the PHY module. As can be seen from Figures 8-10, assertion of the sense signal (CRS-M) whenever another node is transmitting on the bus blocks the first transmission attempt of a data frame by the MAC module which was not available when the sense signal (CRS-M) was de-asserted. To address this, the reconciliation module may be configured to de-assert the sense signal (CRS-M) once a data frame has been transmitted and then keep the sense signal (CRS-M) de-asserted until receipt of the next data frame from the MAC module.

As illustrated in Figures 11-13, this approach means that the MAC module can initiate a first transmission attempt for a data frame whenever the data becomes available (albeit following the wait time) without being blocked by the transmissions of other nodes. Furthermore, the assertion and de-assertion of the sense signal (CRS-M) following a virtual collision is unaffected and follows the behaviour described earlier to enable transmission of the data frame on the second transmission attempt.

If the bus is heavily loaded, there may be more than one frame in the MAC module pending transmission at the earlier transmit opportunity of the node. If the node is only allowed to transmit one frame per transmit opportunity and the MAC module attempts to send a second data frame for the first time directly after the first data frame, the reconciliation module may be configured to pass the first data frame to the PHY module for re-transmission on the bus and assert a collision signal (COL-M) in respect of the second data frame by default when re-transmission of the first data frame has been completed. In this situation, the second data frame would automatically be prepared by the MAC module so that it can be re-transmitted at the subsequent transmit opportunity on de-assertion of the sense signal (CRS-M) by the reconciliation module. This may help to reduce inefficiencies on the bus. If, on the other hand, the node is allowed to transmit multiple frames per transmit opportunity, the first N frames may be directly transmitted (assuming the MAC module has at least N frames in its buffer), and the (N+1)th frame transmission may get blocked using the collision signal (COL-M).

Although the illustrated examples show each transmit opportunity limited to the transmission of a single data frame, it is also possible for a node to transmit a plurality of data frames within a single sequence starting at one transmit opportunity. To allow for this, the reconciliation module may be configured to insert an active-idle sequence between adjacent data frames of the sequence to prevent the bus from becoming idle before the plurality of data frames have being transmitted. Note that in this scenario, the sense signal to the MAC module is de-asserted after every frame while the signal driven on the bus is active-idle. This is done to ensure that the MAC module keeps sending frames up to a predefined maximum number of frames in a burst. Once the maximum number is reached, any further frame will be blocked by a indicating a collision to the MAC module with re-transmission at the next transmit opportunity. If the MAC module has less than the maximum allowed number of frames available to send as a burst, the transmission will time out and stop driving active-idle.

As shown in Figure 7, each node of the multidrop bus network may comprise a MAC module, a PHY module and a reconciliation module. The multidrop bus network may be an Ethernet network, the MAC module may be an Ethernet CSMA/CD MAC layer and the PHY module may be a 10BASE-T1S PHY layer. Furthermore, given that the reconciliation module described in relation to Figure 7 does not require a data buffer, the reconciliation module may be bufferless. Even in "bufferless" examples without a data buffer for storing the first part of a frame until the next transmit opportunity, the reconciliation module may still comprise a small buffer of a few bits in size to facilitate parsing of data between layers/modules of the Ethernet protocol. Nevertheless, the associated collision avoidance mechanism is still applicable even if the reconciliation module comprises a data buffer (e.g. as shown in Figure 3). As mentioned previously, one possible advantage of maintaining a data buffer in the reconciliation module is that the cut-off point for deciding whether to re-transmit the data from the MAC module at the first upcoming transmit opportunity, or whether to defer the re-transmission until the second upcoming transmit opportunity, can be closer to the start of the first upcoming transmit opportunity if the buffered data is immediately available for passing to the PHY module.

It should be noted here that the head node of a 10BASE-T1S bus with PLCA transmits beacons to indicate the start of a new bus cycle. This also allows other nodes to synchronize and detect how many nodes are present on the bus (node count before cycle restart). Beacons have not been included in the diagrams for simplicity reasons. However, the presence of beacons does not hamper the applicability of the ideas/concepts described herein.

Although the reconciliation module (or layer) has been described herein with reference to the MAC and PHY modules (or layers), it could be formed independently of the other modules and incorporated into the node during a subsequent modular assembly process. In some cases, the reconciliation module may even be retrofit to an existing node. Alternatively, the reconciliation module may be integrated with the other modules of the node at the time of manufacture (e.g. as different parts/portions of the same chip). One or more (or each) module may comprise circuitry including at least one processor and at least one memory including computer program code. The at least one memory and computer program code may be configured to, with the at least one processor, cause the module to perform the associated functionality described herein.

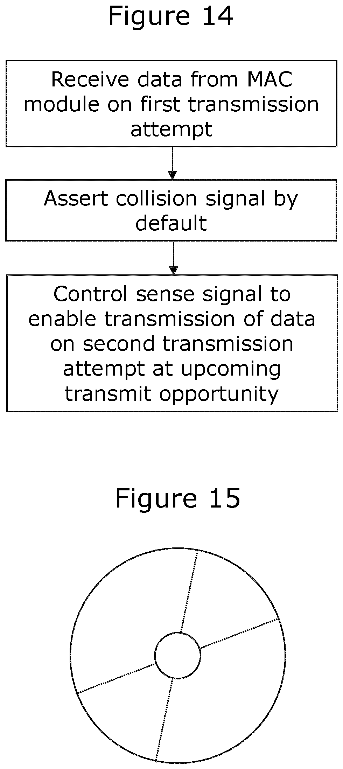

Figure 14 illustrates schematically the main steps of a method of collision avoidance for a node of a multidrop bus network. As shown, the method comprises:
receiving data sent from a MAC module of the node as part of a first attempt by the MAC module to transmit the data;
asserting a collision signal by default on receipt of the data from the MAC module to stop the MAC module from continuing to send the data; and
controlling a sense signal to cause the MAC module to resend the data as part of a second transmission attempt such that the data may be transmitted on the multidrop bus network via a PHY module of the node at an upcoming transmit opportunity.

Figure 15 illustrates schematically a computer/processor readable medium providing a computer program according to one example. The computer program may comprise computer code configured to perform, control or enable one or more of the method steps of Figure 14 using a reconciliation module described herein. In this example, the computer/processor readable medium is a disc such as a digital versatile disc (DVD) or a compact disc (CD). In other embodiments, the computer/processor readable medium may be any medium that has been programmed in such a way as to carry out an inventive function. The computer/processor readable medium may be a removable memory device such as a memory stick or memory card (SD, mini SD, micro SD or nano SD) or an embedded or external non-volatile memory (e.g. flash or MRAM).

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A reconciliation module for a node of a multidrop bus network, the reconciliation module comprising circuitry configured to:
receive data sent from a MAC module of the node as part of a first attempt by the MAC module to transmit the data;
assert a collision signal by default on receipt of the data from the MAC module to stop the MAC module from continuing to send the data; and
control a sense signal to cause the MAC module to resend the data as part of a second transmission attempt such that the data may be transmitted on the multidrop bus network via a PHY module of the node at an upcoming transmit opportunity.

2. The reconciliation module of claim 1, wherein the reconciliation module is configured to control the sense signal such that the second transmission attempt is synchronised with the upcoming transmit opportunity of the node.

3. The reconciliation module of claim 1 or 2, wherein the reconciliation module is configured to:
assert the sense signal on receipt of the data from the MAC module as part of the first transmission attempt: and
keep the sense signal asserted until the data can be transmitted as part of the second transmission attempt at the upcoming transmit opportunity, at which point the sense signal is de-asserted by the reconciliation module.

4. The reconciliation module of claim 3, wherein the MAC module is configured to delay resending of the data by a wait time after de-assertion of the sense signal, and wherein the reconciliation module is configured to transmit a filler sequence during the wait time of the MAC module to prevent the upcoming transmit opportunity of the node from timing out.

5. The reconciliation module of claim 4, wherein the wait time is equal to an inter-packet-gap length.

6. The reconciliation module of any of claims 3 to 5, wherein the MAC module requires a recovery time following assertion of the collision signal before it can resend the data as part of the second transmission attempt, and wherein the reconciliation module is configured to wait at least the recovery time before de-asserting the sense signal.

7. The reconciliation module of any preceding claim, wherein the reconciliation module is configured to:
re-assert the sense signal during the second transmission attempt by the MAC module;
de-assert the sense signal again once the data has been transmitted on the multidrop bus network; and
keep the sense signal de-asserted until receipt of further data from the MAC module.

8. The reconciliation module of any preceding claim, wherein the data received from the MAC module comprises a plurality of data frames within the same sequence for transmission at the upcoming transmit opportunity, and wherein the reconciliation module is configured to insert an active-idle sequence between adjacent data frames to prevent the multidrop bus network from becoming idle before the plurality of data frames have been transmitted.

9. The reconciliation module of any preceding claim, wherein the reconciliation module is bufferless.

10. The reconciliation module of any preceding claim, wherein the reconciliation module is configured to inspect the data, and take any necessary action, after the collision signal has been asserted and before the data has been transmitted.

11. A node of a multidrop bus network, the node comprising the reconciliation module of any preceding claim, the MAC module and the PHY module.

12. The node of claim 11, wherein the multidrop bus network is an Ethernet network, the MAC module is an Ethernet CSMA/CD MAC layer and the PHY module is a 10BASE-T1S PHY layer.

13. A multidrop bus network comprising a plurality of nodes as defined in claim 11 or 12.

14. A method of collision avoidance for a node of a multidrop bus network, the method comprising:
receiving data sent from a MAC module of the node as part of a first attempt by the MAC module to transmit the data;
asserting a collision signal by default on receipt of the data from the MAC module to stop the MAC module from continuing to send the data; and
controlling a sense signal to cause the MAC module to resend the data as part of a second transmission attempt such that the data may be transmitted on the multidrop bus network via a PHY module of the node at an upcoming transmit opportunity.

15. A computer program comprising computer code configured to perform the method of claim 14.
